# EUROPÄISCHE PATENTANMELDUNG

(11) **EP 4 151 574 A1**
(43) Veröffentlichungstag der Anmeldung: **22.03.2023**
(21) Anmeldenummer: 21197905.9
(22) Anmeldetag: 21.09.2021
(51) Int. Cl.: B65H 23/04, G01L 5/04, G01L 5/108

(54) **KRAFTMESSEINRICHTUNG, SYSTEM UND VERFAHREN ZUR ERFASSUNG VON BAHNZÜGEN**

(71) Anmelder: FMS Force Measuring Systems AG, 8154 Oberglatt (CH)
(72) Erfinder: INHELDER, Jörg, 8309 Nürensdorf (CH)
(74) Vertreter: Zeuner Summerer Stütz

(57) **Zusammenfassung**

Die Erfindung betrifft eine Kraftmesseinrichtung (10) zur Erfassung der Bahnzüge einer Mehrzahl von beabstandeten Längsstreifen (5) einer längsgeschnittenen laufenden Materialbahn, die eine durch die Laufrichtung der Materialbahn definierte Längsrichtung und eine Querrichtung aufweist, wobei die Kraftmesseinrichtung eine Achse (12) und auf der Achse abgestützte, von der Materialbahn umschlungene Messwalze (20) aufweist. Dabei ist vorgesehen, dass die Messwalze als segmentierte Messwalze (20) mit einer Mehrzahl von Messsegmenten (22) ausgebildet ist, die Messsegmente (22) auf der Achse (12) in einer jeweiligen Messposition angeordnet sind, so dass die beabstandeten Längsstreifen (5) der laufenden Materialbahn jeweils eines oder mehrere Messsegmente (22) umschlingen und jedes Messsegment (22) von höchstens einem Längsstreifen (5) umschlungen ist, jedes Messsegment (22) einen eigenen Kraftaufnehmer (26) für die Bestimmung eines Bahnzuganteils des das Messsegment umschlingenden Längsstreifens (5) enthält, wobei der Kraftaufnehmer eine Halterung bereitstellt, mit der das Messsegment (22) auf der Achse (12) aufsitzt, die Kraftmesseinrichtung weiter eine Auswerteeinheit (18) aufweist, mit der die Messsegmente (22) über elektrische Leiter verbunden sind und zu der die von den Kraftaufnehmern (26) der Messsegmente (22) gelieferte Messsignale leitbar sind, und die Auswerteeinheit (18) ein Bahnzugzusammenführungsmittel (19) umfasst, das ausgelegt und eingerichtet ist, für jeden Längsstreifen (5) aus den Bahnzuganteilen, die von den Kraftaufnehmern (26) der von diesem Längsstreifen (5) umschlungenen Messsegmente (22) bestimmt werden, den gesamten Bahnzug des Längsstreifens (5) zu bestimmen.

## Beschreibung

Die Erfindung betrifft eine Kraftmesseinrichtung und ein System zur Erfassung von Bahnzügen in einer längsgeschnittenen laufenden Materialbahn. Die Erfindung betrifft auch zugehörige Verfahren zur Erfassung von Bahnzügen mit einer solchen Kraftmesseinrichtung bzw. einem solchen System.

In Anlagen zur Herstellung oder Weiterverarbeitung bahnförmiger Materialien, beispielsweise Papier, Kunststofffolien, Alufolien oder Folien für Batterien oder Kondensatoren, werden die Materialbahnen zu Beginn des Verarbeitungsprozesses mit Bahnbreiten von einigen Metern verarbeitet. Oft werden für die Weiterverarbeitung, beispielsweise beim Etikettendruck oder der Verpackungsherstellung, deutlich schmalere Bahnen benötigt, und die Materialbahnen werden dazu auf Rollenschneidern in schmalere Längsstreifen der gewünschten Breite geschnitten. Herkömmliche Kraftmesseinrichtungen messen den Bahnzug einer Materialbahn über die gesamte Bahnbreite, für die Weiterverarbeitung geschnittener Bahnen wäre es allerdings von Vorteil, genauere Angaben über den Bahnzug in jedem der Längsstreifen einer geschnittenen Bahn zu erhalten.

Hier setzt die Erfindung an. Der Erfindung, wie sie in den Ansprüchen gekennzeichnet ist, liegt die Aufgabe zugrunde, eine Kraftmesseinrichtung der eingangs genannten Art anzugeben, mit der die Bahnzüge einer Mehrzahl von Längsstreifen einer längsgeschnittenen laufenden Materialbahn erfasst werden können. Die Erfindung soll auch ein zugehöriges Verfahren zur Erfassung von Bahnzügen in einer längsgeschnittenen laufenden Materialbahn bereitstellen.

Diese Aufgabe wird durch die Merkmale der unabhängigen Ansprüche gelöst. Weiterbildungen der Erfindung sind Gegenstand der abhängigen Ansprüche.

Die Erfindung stellt eine Kraftmesseinrichtung zur Erfassung der Bahnzüge einer Mehrzahl von beabstandeten Längsstreifen einer längsgeschnittenen laufenden Materialbahn bereit, welche eine durch die Laufrichtung der Materialbahn definierte Längsrichtung und eine Querrichtung aufweist. Die Kraftmesseinrichtung weist eine Achse und auf der Achse abgestützte, von der Materialbahn umschlungene Messwalze auf. Bei der Kraftmesseinrichtung ist vorgesehen, dass
- die Messwalze als segmentierte Messwalze mit einer Mehrzahl von Messsegmenten ausgebildet ist,
- die Messsegmente auf der Achse in einer jeweiligen Messposition angeordnet sind, so dass die beabstandeten Längsstreifen der laufenden Materialbahn jeweils eines oder mehrere Messsegmente umschlingen und jedes Messsegment von höchstens einem Längsstreifen umschlungen ist,
- jedes Messsegment einen eigenen Kraftaufnehmer für die Bestimmung eines Bahnzuganteils des das Messsegment umschlingenden Längsstreifens enthält, wobei der Kraftaufnehmer eine Halterung bereitstellt, mit der das Messsegment auf der Achse aufsitzt,
- die Kraftmesseinrichtung weiter eine Auswerteeinheit aufweist, mit der die Messsegmente über elektrische Leiter verbunden sind und zu der die von den Kraftaufnehmern der Messsegmente gelieferte Messsignale leitbar sind, und
- die Auswerteeinheit ein Bahnzugzusammenführungsmittel umfasst, das ausgelegt und eingerichtet ist, für jeden Längsstreifen aus den Bahnzuganteilen, die von den Kraftaufnehmern der von diesem Längsstreifen umschlungenen Messsegmente bestimmt werden, den gesamten Bahnzug des Längsstreifens zu bestimmen.

Die Messsegmente umfassen dabei zweckmäßig neben dem Kraftaufnehmer einen Walzenmantel und eine von dem Kraftaufnehmer getragene Lagerung für den Walzenmantel.

In einer bevorzugten Ausgestaltung enthält der Kraftaufnehmer jeweils einen auf der Achse aufliegenden Innenring, der die genannte Halterung bereitstellt. Der Kraftaufnehmer weist weiter einen gegenüber dem Innenring unter Krafteinwirkung verschiebbaren, konzentrischen Außenring und einen den Innenring und Außenring in einem Verbindungsbereich verbindenden Messabschnitt auf. Bei der Messung des Bahnzugs wird durch die Krafteinleitung der Außenring radial relativ zu dem Innenring verschoben und dadurch Spannungen in dem Messabschnitt erzeugt, die mittels Dehnmessstreifen erfasst werden können. In einer vorteilhaften Ausgestaltung ist der Messabschnitt in Form eines Doppelbiegebalkens ausgebildet.

Mit besonderem Vorteil weist der Innenring eine Einbuchtung auf, in der der Verbindungsbereich mit dem Außenring aufgenommen ist. Die Einbuchtung kann sich radial bis zum halben Radius des Innenrings, vorzugsweise sogar bis zum Mittelpunkt des Innenrings erstrecken. Der Kraftaufnehmer ist vorteilhaft mit der Einbuchtung des Innenrings in einer axialen Führungskammer der Achse geführt. Auf diese Weise wird eine besonders kompakte Bauweise des Kraftaufnehmers und der Kraftmesseinrichtung erreicht und der Kraftaufnehmer zudem mit der Achse der Kraftmesseinrichtung integriert.

Gemäß einer vorteilhaften Erfindungsvariante sind der Innenring und der Außenring radial ineinander angeordnet und in einem radialen Verbindungsbereich durch den Messabschnitt verbunden. Als Überlastschutz sind der Innenring und der Außenring vorzugsweise außerhalb des Verbindungsbereichs durch einen schmalen radialen Spalt getrennt, dessen Breite so bemessen ist, dass der bewegliche Außenring bei Überlast am auf der Achse fixierten Innenring ansteht. Die Spaltbreite entspricht beispielsweise 110% des Messwegs bei Nennbelastung und liegt typischerweise im Bereich einiger zehntel Millimeter.

Bei einer anderen, ebenfalls vorteilhaften Ausgestaltung sind der Innenring und der Außenring axial beabstandet angeordnet und in einem axialen Verbindungsbereich durch den Messabschnitt verbunden.

Der Kraftaufnehmer ist vorteilhaft mit Dehnmessstreifen zur Erfassung des Bahnzugs versehen. Vorzugsweise ist der einen Innenring und Außenring verbindende Messabschnitt mit den genannten Dehnmessstreifen zur Erfassung der in dem Messabschnitt erzeugten mechanischen Spannung versehen.

Der Innenring, der Außenring und der Messabschnitt des Kraftaufnehmers sind mit besonderem Vorteil einstückig ausgebildet.

Gemäß einer bevorzugten Ausgestaltung ist die Achse als Strangprofil ausgebildet. Vorzugsweise weist das Strangprofil einen vertikalen Steg und zwei von dem vertikalen Steg ausgehende horizontale Führungsschienen auf, so dass der vertikale Steg und die beiden Führungsschienen eine axiale Führungskammer, insbesondere eine U-förmige axiale Führungskammer in dem Strangprofil der Achse bilden.

Alternativ kann die Achse auch als gefräste Achse ausgebildet sein, bei der die axiale Führungskammer und gegebenenfalls weitere Ausnehmungen, wie etwa eine axiale Nut für einen Luftschlauch und eine Druckleiste, in einen Rundstab eingefräst sind.

Die elektrischen Leiter sind in einer vorteilhaften Ausgestaltung in der Achse und sich im Wesentlichen in axialer Richtung über die gesamte Breite der Achse erstreckend vorgesehen und sind axial an jeder Stelle kontaktierbar. Besonders bevorzugt weist die Achse eine axiale Führungskammer auf, die mit axial verlaufenden Stromschienen versehen ist, die an einer beliebigen axialen Position von Stromabnehmern der Kraftaufnehmer der Messsegmente kontaktierbar sind und die genannten elektrischen Leiter bilden. Mit besonderem Vorteil sind in der axialen Führungskammer sowohl der Kraftaufnehmer mit der Einbuchtung des Innenrings geführt, als auch die axial verlaufenden Stromschienen angeordnet.

Die elektrische Verbindung zwischen den Messsegmenten und der Auswerteeinheit muss allerdings nicht zwingend über die Achse erfolgen. Es können beispielsweise auch elektrische Leiter jeweils zwischen benachbarten Messsegmenten vorgesehen sein und nur das äußerste Messsegment (oder die äußersten Messsegmente) mit der Auswerteeinheit verbunden sein, so dass die Messsignale über die die Messsegmente verbindenden Leiter zur Auswerteeinheit durchgeschleift werden.

Die Messsegmente enthalten bevorzugt jeweils eine Elektronikeinheit zur Speisung der Dehnmessstreifen und zur Aufnahme, zur Vorverstärkung, vorzugsweise zusätzlich zur Digitalisierung, und zur Einleitung der vorverstärkten und gegebenenfalls digitalisierten Messsignale in die elektrischen Leitungen, insbesondere die Stromschienen der Achse. Eine Digitalisierung der Messsignale ist insbesondere dann von Vorteil, wenn die segmentierte Messwalze eine größere Anzahl von Messsegmenten, beispielsweise vier oder mehr oder sechs oder mehr Messsegmente umfasst, da die digitalisierten Messsignale dann über ein Busprotokoll über wenige, typischerweise zwei Stromleitungen zur Auswerteeinheit geführt werden können. Vor allem wenn die segmentierte Messwalze nur eine geringe Anzahl von Messsegmenten enthält, können die Messsignale natürlich auch analog jeweils über eine eigene Stromleitung zur Auswerteeinheit geführt werden.

Zur Messung der Drehgeschwindigkeit ist jedes Messsegment mit Vorteil mit einer Einrichtung zur Messung der Drehgeschwindigkeit versehen, wobei die Einrichtung vorzugsweise einen oder mehrere, mit dem Walzenmantel umlaufende Magneten und einen mit dem Kraftaufnehmer verbundenen statischen Hallgeber umfasst. Aus der beim Umlauf erzeugten Hallspannung kann in dem Fachmann bekannter Weise die Drehgeschwindigkeit jedes Messsegments ermittelt und über die Elektronikeinheit zur Auswerteeinheit geführt werden. Die individuelle Bestimmung der Drehgeschwindigkeit jedes Messsegments erlaubt insbesondere festzustellen, ob bei einem oder mehreren Messsegmenten im Betrieb Schlupf auftritt, beispielsweise durch verschmutzte oder beschädigte Wälzlager.

In einer vorteilhaften Ausgestaltung enthält die Achse in einer axialen Nut einen Luftschlauch und eine Druckleiste für die Arretierung der Messsegmente auf der Achse. Dabei enthält die Auswerteeinheit vorzugsweise einen Drucksensor für die Überwachung des Luftdrucks des Luftschlauchs. Bei einer Abweichung des Luftdrucks vom Sollwert kann die Auswerteeinheit beispielsweise ein Warnsignal ausgeben oder andere geeignete Maßnahmen einleiten.

Alternativ können die Messsegmente auch mechanisch auf der Achse fixiert sein, wobei auch eine individuelle Fixierung jedes einzelnen Segments, beispielsweise mit Hilfe einer Stellschraube in Frage kommt.

Auf der Achse sind vorteilhaft drei oder mehr, insbesondere sechs oder mehr, oder sogar zehn oder mehr Messsegmente in einer jeweiligen Messposition angeordnet.

Die Messsegmente sind in einer vorteilhaften Ausgestaltung so auf der Achse angeordnet, dass ihre Walzenmäntel ohne sich zu berühren praktisch spaltfrei benachbart sind. Mit Vorteil weisen die Walzenmäntel der Messsegmente gleiche Breite auf.

Die Erfindung enthält auch ein System zur Erfassung der Bahnzüge einer Mehrzahl von Längsstreifen einer längsgeschnittenen laufenden Materialbahn, die eine durch die Laufrichtung der Materialbahn definierte Längsrichtung und eine Querrichtung aufweist, mit
- zwei oder mehr verschiedenen Materialpfaden zur Führung jeweils eines Teils der Längsstreifen der geschnitten Materialbahn in verschiedene Ebenen, um mehrere Materialteilbahnen mit jeweils einer Mehrzahl von beabstandeten Längsstreifen zu erhalten, und
- zwei oder mehr Kraftmesseinrichtungen der oben beschriebenen Art zur Erfassung der Bahnzüge der Mehrzahl von beabstandeten Längsstreifen der Materialteilbahnen.

In einer bevorzugten Ausgestaltung sind dabei genau zwei Materialpfade zur Führung alternierender Längsstreifen der geschnitten Materialbahn in zwei verschiedene Ebenen vorgesehen, um zwei Materialteilbahnen mit jeweils einer Mehrzahl beabstandeten Längsstreifen zu erhalten, und es sind zwei Kraftmesseinrichtungen der oben beschriebenen Art zur Erfassung der Bahnzüge der Mehrzahl von beabstandeten Längsstreifen der Materialteilbahnen vorgesehen.

Die Erfindung enthält weiter ein Verfahren zur Erfassung der Bahnzüge einer Mehrzahl von beabstandeten Längsstreifen einer längsgeschnittenen laufenden Materialbahn mit einer Kraftmesseinrichtung der oben beschriebenen Art, bei dem
- die Mehrzahl von beabstandeten Längsstreifen der Materialbahn so über die segmentierte Messwalze der Kraftmesseinrichtung geführt werden, dass die beabstandeten Längsstreifen jeweils eines oder mehrere Messsegmente umschlingen und jedes Messsegment von höchstens einem Längsstreifen umschlungen ist,
- mit den Kraftaufnehmern der Messsegmente der Bahnzuganteil des das jeweilige Messsegment umschlingenden Längsstreifens bestimmt wird,
- die von den Kraftaufnehmern bestimmten Messsignale zu der Auswerteeinheit geleitet werden, und von dem Bahnzugzusammenführungsmittel für jeden Längsstreifen aus den Bahnzuganteilen, die von den Kraftaufnehmern der von diesem Längsstreifen umschlungenen Messsegmente bestimmt wurden, der gesamten Bahnzug des Längsstreifens bestimmt wird.

Die Erfindung enthält schließlich auch ein Verfahren zur Erfassung der Bahnzüge einer Mehrzahl von Längsstreifen einer längsgeschnittenen laufenden Materialbahn mit einem System der oben beschriebenen Art, bei dem
- jeweils ein Teil der Längsstreifen der geschnitten Materialbahn entlang eines der Materialpfade in verschiedene Ebenen geführt wird, so dass mehrere Materialteilbahnen mit jeweils einer Mehrzahl von beabstandeten Längsstreifen erhalten werden, und
- die Bahnzüge der Mehrzahl von beabstandeten Längsstreifen der Materialteilbahnen mit zwei oder mehr Kraftmesseinrichtungen der oben beschriebenen Art erfasst werden.

Durch eine Messung der Bahnzüge der Längsstreifen einer geschnittenen Bahn wird eine individuelle Regelung des Aufwickelvorgangs erst ermöglicht und damit viel Ausschuss durch ungeeignete Zugverhältnisse in einzelnen Längsstreifen vermieden.

In einem weiteren Aspekt betrifft die Erfindung das Problem, das Zugprofil einer ungeschnittenen laufenden Materialbahn, die eine durch die Laufrichtung der Materialbahn definierte Längsrichtung und eine Querrichtung aufweist, zu bestimmen. Zur Lösung dieser Aufgabe ist eine Kraftmesseinrichtung vorgesehen, die eine Achse und auf der Achse abgestützte, von der Materialbahn umschlungene Messwalze aufweist, bei der
- die Messwalze als segmentierte Messwalze mit einer Mehrzahl von Messsegmenten ausgebildet ist,
- die Messsegmente auf der Achse in einer jeweiligen Messposition angeordnet sind,
- jedes Messsegment einen eigenen Kraftaufnehmer für die Bestimmung eines Bahnzuganteils des das Messsegment umschlingenden Längsabschnitts der Materialbahn enthält, wobei der Kraftaufnehmer eine Halterung bereitstellt, mit der das Messsegment auf der Achse aufsitzt,
- die Kraftmesseinrichtung weiter eine Auswerteeinheit aufweist, mit der die Messsegmente über elektrische Leiter verbunden sind und zu der die von den Kraftaufnehmern der Messsegmente gelieferte Messsignale leitbar sind,
- wobei elektrische Leiter jeweils zwischen benachbarten Messsegmenten vorgesehen sind und nur das äußerste Messsegment oder die äußersten Messsegmente mit der Auswerteeinheit verbunden sind, so dass die Messsignale über die die Messsegmente verbindenden Leiter zur Auswerteeinheit durchgeschleift werden.

In einer vorteilhaften Ausgestaltung umfassen die Messsegmente neben dem Kraftaufnehmer einen Walzenmantel und eine von dem Kraftaufnehmer getragene Lagerung für den Walzenmantel, und die Messsegmente sind so auf der Achse angeordnet, dass ihre Walzenmäntel ohne sich zu berühren praktisch spaltfrei benachbart sind.

Weitere Details und Vorteile der Kraftmesseinrichtung des weiteren Aspekts entsprechen den Details und Vorteilen der oben bereits ausführlich beschriebenen Kraftmesseinrichtung, wobei einige besonders vorteilhafte Ausgestaltungen nachfolgend kurz angesprochen sind:
Auch bei der Kraftmesseinrichtung des weiteren Aspekts weist der Kraftaufnehmer mit Vorteil jeweils einen auf der Achse aufliegenden Innenring auf, der die genannte Halterung bereitstellt. Der Kraftaufnehmer weist weiter einen gegenüber dem Innenring unter Krafteinwirkung verschiebbaren, konzentrischen Außenring und einen den Innenring und Außenring in einem Verbindungsbereich verbindenden Messabschnitt auf. Bei der Messung des Bahnzugs wird durch die Krafteinleitung der Außenring radial relativ zu dem Innenring verschoben und dadurch Spannungen in dem Messabschnitt erzeugt, die mittels Dehnmessstreifen erfasst werden können. In einer vorteilhaften Ausgestaltung ist der Messabschnitt in Form eines Doppelbiegebalkens ausgebildet.

Mit besonderem Vorteil weist der Innenring eine Einbuchtung auf, in der der Verbindungsbereich mit dem Außenring aufgenommen ist. Die Einbuchtung kann sich radial bis zum halben Radius des Innenrings, vorzugsweise sogar bis zum Mittelpunkt des Innenrings erstrecken. Der Kraftaufnehmer ist vorteilhaft mit der Einbuchtung des Innenrings in einer axialen Führungskammer der Achse geführt. Auf diese Weise wird eine besonders kompakte Bauweise des Kraftaufnehmers und der Kraftmesseinrichtung erreicht und der Kraftaufnehmer zudem mit der Achse der Kraftmesseinrichtung integriert.

Gemäß einer vorteilhaften Erfindungsvariante sind der Innenring und der Außenring radial ineinander angeordnet und in einem radialen Verbindungsbereich durch den Messabschnitt verbunden. Als Überlastschutz sind der Innenring und der Außenring vorzugsweise außerhalb des Verbindungsbereichs durch einen schmalen radialen Spalt getrennt, dessen Breite so bemessen ist, dass der bewegliche Außenring bei Überlast am auf der Achse fixierten Innenring ansteht. Die Spaltbreite entspricht beispielsweise 110% des Messwegs bei Nennbelastung und liegt typischerweise im Bereich einiger zehntel Millimeter.

Bei einer anderen, ebenfalls vorteilhaften Ausgestaltung sind der Innenring und der Außenring axial beabstandet angeordnet und in einem axialen Verbindungsbereich durch den Messabschnitt verbunden.

Der Kraftaufnehmer ist vorteilhaft mit Dehnmessstreifen zur Erfassung des Bahnzugs versehen. Vorzugsweise ist der einen Innenring und Außenring verbindende Messabschnitt mit den genannten Dehnmessstreifen zur Erfassung der in dem Messabschnitt erzeugten mechanischen Spannung versehen.

Der Innenring, der Außenring und der Messabschnitt des Kraftaufnehmers sind mit besonderem Vorteil einstückig ausgebildet.

Gemäß einer bevorzugten Ausgestaltung ist die Achse als Strangprofil ausgebildet. Vorzugsweise weist das Strangprofil einen vertikalen Steg und zwei von dem vertikalen Steg ausgehende horizontale Führungsschienen auf, so dass der vertikale Steg und die beiden Führungsschienen eine axiale Führungskammer, insbesondere eine U-förmige axiale Führungskammer in dem Strangprofil der Achse bilden.

Alternativ kann die Achse auch als gefräste Achse ausgebildet sein, bei der die axiale Führungskammer und gegebenenfalls weitere Ausnehmungen, wie etwa eine axiale Nut für einen Luftschlauch und eine Druckleiste, in einen Rundstab eingefräst sind.

Die Messsegmente enthalten bevorzugt jeweils eine Elektronikeinheit zur Speisung der Dehnmessstreifen und zur Aufnahme, zur Vorverstärkung, vorzugsweise zusätzlich zur Digitalisierung, und zur Einleitung der vorverstärkten und gegebenenfalls digitalisierten Messsignale in die elektrischen Leitungen, insbesondere die Stromschienen der Achse. Eine Digitalisierung der Messsignale ist insbesondere dann von Vorteil, wenn die segmentierte Messwalze eine größere Anzahl von Messsegmenten, beispielsweise vier oder mehr oder sechs oder mehr Messsegmente umfasst, da die digitalisierten Messsignale dann über ein Busprotokoll über wenige, typischerweise zwei Stromleitungen zur Auswerteeinheit geführt werden können. Vor allem wenn die segmentierte Messwalze nur eine geringe Anzahl von Messsegmenten enthält, können die Messsignale natürlich auch analog jeweils über eine eigene Stromleitung zur Auswerteeinheit geführt werden.

Zur Messung der Drehgeschwindigkeit ist jedes Messsegment mit Vorteil mit einer Einrichtung zur Messung der Drehgeschwindigkeit versehen, wobei die Einrichtung vorzugsweise einen oder mehrere, mit dem Walzenmantel umlaufende Magneten und einen mit dem Kraftaufnehmer verbundenen statischen Hallgeber umfasst. Aus der beim Umlauf erzeugten Hallspannung kann in dem Fachmann bekannter Weise die Drehgeschwindigkeit jedes Messsegments ermittelt und über die Elektronikeinheit zur Auswerteeinheit geführt werden. Die individuelle Bestimmung der Drehgeschwindigkeit jedes Messsegments erlaubt insbesondere festzustellen, ob bei einem oder mehreren Messsegmenten im Betrieb Schlupf auftritt, beispielsweise durch verschmutzte oder beschädigte Wälzlager.

In einer vorteilhaften Ausgestaltung enthält die Achse in einer axialen Nut einen Luftschlauch und eine Druckleiste für die Arretierung der Messsegmente auf der Achse. Dabei enthält die Auswerteeinheit vorzugsweise einen Drucksensor für die Überwachung des Luftdrucks des Luftschlauchs. Bei einer Abweichung des Luftdrucks vom Sollwert kann die Auswerteeinheit beispielsweise ein Warnsignal ausgeben oder andere geeignete Maßnahmen einleiten.

Alternativ können die Messsegmente auch mechanisch auf der Achse fixiert sein, wobei auch eine individuelle Fixierung jedes einzelnen Segments, beispielsweise mit Hilfe einer Stellschraube in Frage kommt.

Schließlich sind bei der Kraftmesseinrichtung des weiteren Aspekts auf der Achse vorteilhaft drei oder mehr, insbesondere sechs oder mehr, oder sogar zehn oder mehr Messsegmente praktisch spaltfrei nebeneinander angeordnet. Mit Vorteil weisen die Walzenmäntel der Messsegmente gleiche Breite auf.

Weitere Ausführungsbeispiele sowie Vorteile der Erfindung werden nachfolgend anhand der Figuren erläutert, bei deren Darstellung auf eine maßstabsund proportionsgetreue Wiedergabe verzichtet wurde, um die Anschaulichkeit zu erhöhen.

Es zeigen:
- Fig. 1: schematisch eine erfindungsgemäße Kraftmesseinrichtung,
- Fig. 2: eine geschnittene Materialbahn mit Längsstreifen, deren Bahnzüge erfasst werden sollen,
- Fig. 3: in (a) und (b) jeweils die Messwalze einer erfindungsgemäßen Kraftmesseinrichtung, deren Messsegmente von alternierenden Längsstreifen der Materialbahn der Fig. 2 umschlungen werden,
- Fig. 4: in (a) und (b) in einer Darstellung wie bei Fig. 3 die Messung der Bahnzüge einer anderen geschnittenen Materialbahn,
- Fig. 5: einen Querschnitt durch eine erfindungsgemäße Kraftmesseinrichtung,
- Fig. 6: den Kraftaufnehmer eines Messsegmentes der Kraftmesseinrichtung der Fig. 5 separat im Querschnitt,
- Fig. 7: eine perspektivische Ansicht des Kraftaufnehmers der Fig. 6,
- Fig. 8: die Achse der Kraftmesseinrichtung der Fig. 5 separat in perspektivischer Ansicht,
- Fig. 9: in (a) die Achse der Fig. 8 im Querschnitt, in (b) eine gefräste Achse nach einem weiteren Ausführungsbeispiel der Erfindung,
- Fig. 10: den Kraftaufnehmer der Fig. 6 mit eingezeichneter Elektronikplatine und den Kontaktbereichen zu den Dehnmessstreifen und den Stromschienen der Achse,
- Fig. 11: einen erfindungsgemäßen Kraftaufnehmer mit einem in axialer Richtung verlaufenden Messabschnitt im Querschnitt,
- Fig. 12: eine Kraftmesseinrichtung für die Erfassung des Zugprofils einer ungeschnittenen laufenden Materialbahn, und
- Fig. 13: schematisch ein mit der Kraftmesseinrichtung der Fig. 12 gemessenes Zugprofil einer ungeschnittenen Materialbahn, bei dem der Bahnzug BZ über der Ausdehnung x in Querrichtung aufgetragen ist.

Die Erfindung wird nun am Beispiel von Kraftmesseinrichtungen zur Erfassung der Bahnzüge einer Mehrzahl von Längsstreifen einer geschnittenen laufenden Materialbahn näher erläutert.

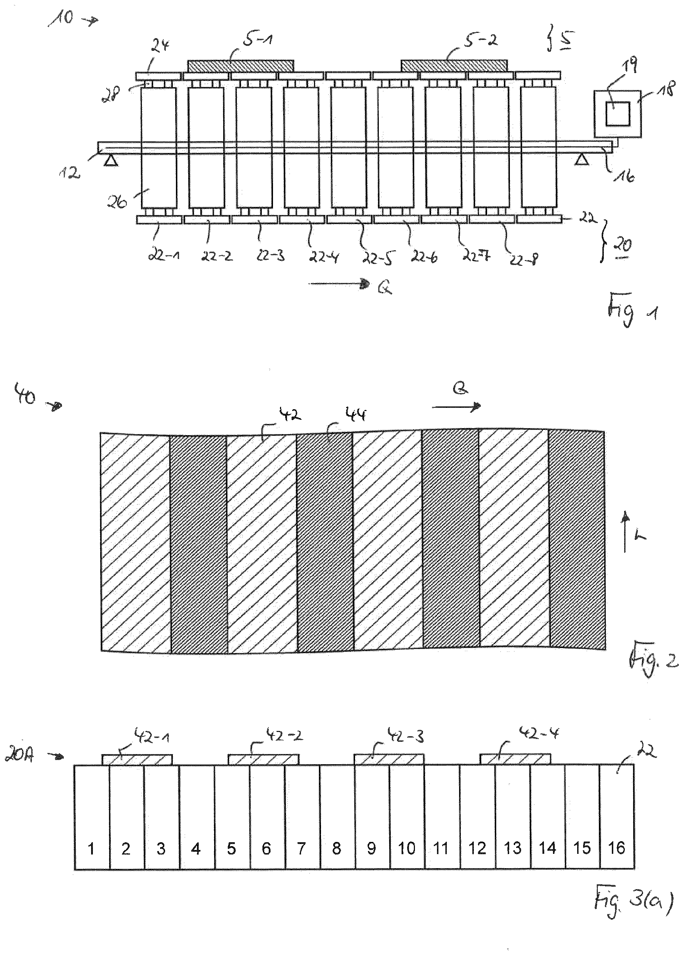

Figur 1 zeigt dazu schematisch eine Kraftmesseinrichtung 10 mit einer biegesteifen Achse 12, die an ihren beiden Enden auf einem nicht dargestellten bauseitigen Untergerüst aufliegt. Auf der Achse 12 ist eine segmentierte Messwalze 20 abgestützt, die im Messbetrieb von den beabstandeten Längsstreifen 5 der zu vermessenden, laufenden Materialbahn umschlungen ist.

Die Messwalze 20 enthält eine Mehrzahl von Messsegmenten 22, die auf der Achse 12 in einer jeweiligen Messposition entlang der Querrichtung Q praktisch spaltfrei nebeneinander angeordnet sind. Jedes Messsegment 22 weist einen Walzenmantel 24 auf, der im Messbetrieb von einem der Längsstreifen 5 über seine vollständige Breite, oder auch nur über einem Teil seiner Breite umschlungen sein kann. Der Walzenmantel 24 ist jeweils über ein oder mehrere Wälzlager 28 mit einem Kraftaufnehmer 26 verbunden, der der Bestimmung eines Bahnzugsanteils für den umschlingenden Längsstreifen 5 dient. Jeder Kraftaufnehmer 26 stellt zudem eine Halterung bereit, mit der das jeweilige Messsegment 22 auf der Achse 12 aufsitzt.

Wie in Fig. 1 illustriert, umschlingen die Längsstreifen 5 der laufenden Materialbahn jeweils mehrere der Messsegmente 22,wobei je nach der Breite und Lage der Streifen 5-1, 5-2 einige Messsegmente 22 über ihre gesamte Breite und andere Messsegmente nur über einen Teil ihrer Breite umschlungen sind. Konkret umschlingt in der Gestaltung der Fig.1 der Längsstreifen 5-1 das Messsegment 22-3 über die gesamte Breite und die Messsegmente 22-2 und 22-4 über einen Teil der Breite, während der Längsstreifen 5-2 das Messsegment 22-7 über die gesamte Breite und die Messsegmente 22-6 und 22-8 über einen Teil der Breite umschlingt.

Wesentlich ist dabei insbesondere, dass jedes Messsegment 22 von höchstens einem Längsstreifen 5 umschlungen ist. Dadurch kann der von dem Kraftaufnehmer 26 des Messsegments 22 erfasste Bahnzuganteil in der Auswerteeinheit 18 von dem Bahnzugzusammenführungsmittel 19 eindeutig einem bestimmten der Längsstreifen 5 zugeordnet werden. Der gesamte Bahnzug eines Längsstreifens 5 ergibt sich dann aus der Summe der Bahnzuganteile, die von den Kraftaufnehmern 26 der von diesem Längsstreifen umschlungenen Messsegmente 22 gemessen werden.

Beispielsweise ergibt sich bei der Situation der Fig. 1 der Bahnzug des Längsstreifens 5-1 als Summe der von den Kraftaufnehmern der Messsegmente 22-2, 22-3 und 22-4 bestimmten Bahnzuganteile. Entsprechend ergibt sich der Bahnzug des Längsstreifens 5-2 als Summe der von den Kraftaufnehmern der Messsegmente 22-6, 22-7 und 22-8 bestimmten Bahnzuganteile.

Zur einfachen und zuverlässigen Bestimmung der Bahnzüge der Längsstreifen 5 ist die Achse 12 im Ausführungsbeispiel der Fig. 1 als intelligente Achse ausgebildet, die mit sich in axialer Richtung im Wesentlichen über die gesamte Breite erstreckenden elektrischen Leitern 16 versehen ist, die axial an jeder Stelle kontaktierbar sind. Mit den kontaktierten Leitern 16 werden im Messbetrieb die von den Kraftaufnehmern 26 der Messsegmente 22 gelieferten Messsignale zu der am Achsenende angeordneten Auswerteeinheit 18 mit dem Bahnzugzusammenführungsmittel 19 geleitet. Grundsätzlich kann die elektrische Verbindung zwischen den Messsegmenten und der Auswerteeinheit auch auf andere Weise erfolgen. Beispielsweise können die elektrischen Leiter 16 auch auf der Außenseite der Achse 12, etwa in einer axialen Nut angeordnet sein, oder es können elektrische Leiter jeweils zwischen benachbarten Messsegmenten vorgesehen sein, mit denen die Messsignale zur Auswerteeinheit durchgeschleift werden.

Die Figuren 2 bis 4 erläutern die Vorgehensweise bei der Ermittlung des gesamten Bahnzugs für die Längsstreifen einer geschnittenen Materialbahn mit Hilfe erfindungsgemäßer Kraftmesseinrichtungen bzw. mit Hilfe eines erfindungsgemäßen Systems genauer.

Zunächst zeigt Fig. 2 beispielhaft eine geschnittene Materialbahn 40, deren Laufrichtung eine Längsrichtung L und eine dazu senkrechte Querrichtung Q definiert. Die Materialbahn 40 ist alternierend in Längsstreifen 42 einer Breite von 100 mm und Längsstreifen 44 einer Breite von 80 mm geschnitten. Die geschnittenen Längsstreifen 42, 44 werden für die Messung des Bahnzugs und eine nachfolgende Aufwicklung alternierend nach oben bzw. unten in unterschiedliche Ebenen geführt, so dass sich die in Fig. 2 im Querrichtung Q nebeneinander liegenden Längsstreifen 42, 44 bei der Bahnzugmessung und der Aufwicklung nicht behindern.

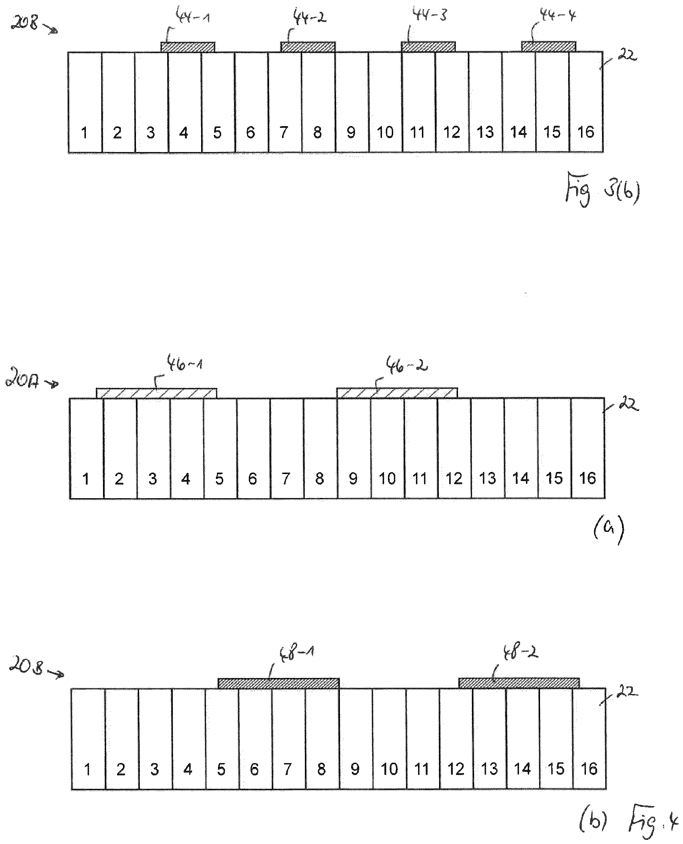

Die Bahnzüge der Längsstreifen 42 werden mit einer ersten erfindungsgemäßen Kraftmesseinrichtung mit einer Messwalze 20A bestimmt, die in Fig. 3(a) dargestellt ist, die Bahnzüge der Längsstreifen 44 mit einer zweiten erfindungsgemäßen Kraftmesseinrichtung mit einer Messwalze 20B bestimmt, die in Fig. 3(b) dargestellt ist. Jede Messwalze 20A, 20B enthält im Ausführungsbeispiel 16 nebeneinander angeordnete Messsegmente 22 der oben beschriebenen Art mit einer Breite von beispielsweise jeweils 50 mm. Für eine einfache Bezugnahme sind die Messsegmente von links nach rechts durchnummeriert.

Wie in den Figuren 3(a) und (b) gezeigt, umschlingen die Längsstreifen 42, 44 jeweils zwei oder mehr der Messsegmente 22 der Messwalzen 20A, 20B über die gesamte Breite oder einen Teil der Breite der Messsegmente. Dabei ist jedes Messsegment 22 von höchstens einem Längsstreifen 42, 44 umschlungen, so dass eine eindeutige Zuordnung der gemessen Bahnzuganteile zu den Streifen möglich ist.

Konkret umschlingt im gezeigten Ausführungsbeispiel der Längsstreifen 42-1 die Messsegmente #1, #2 und #3 der Messwalze 20A und zwar das Messsegment #2 über die gesamte Breite und die Messsegmente #1 und #3 über einen Teil der Breite. Der Längsstreifen 42-2 umschlingt das Messsegment #6 über die gesamte Breite und die Messsegmente #5 und #7 über einen Teil der Breite, der Längsstreifen 42-3 umschlingt die Messsegmente #9 und #10 über die gesamte Breite und der Längsstreifen 42-4 umschlingt das Messsegment #13 über die gesamte Breite und die Messsegmente #12 und #14 über einen Teil der Breite.

Die Tabelle I zeigt für die 16 Messsegmente der Messwalze 20A die von den Kraftaufnehmern jeweils gemessenen Bahnzuganteile in Newton (N). Aus diesen Bahnzuganteilen und der Zuordnung der Längsstreifen 42-1 bis 42-4 zu den Messsegmenten kann durch Aufaddieren der Bahnzuganteile der gesamte Bahnzug des jeweiligen Längsstreifens in Newton (N) bestimmt werden. Als einfaches Rechenbeispiel wurde ein Bahnzug von 100 N pro 100 mm Bahnbreite gewählt. Für eine korrekte Bestimmung der Bahnzüge ist wichtig, dass jedes Messsegment 22 von höchstens einem Längsstreifen umschlungen wird, da nur dann eine eindeutige Zuordnung eines gemessenen Bahnzuganteils zu einem der Längsstreifen möglich ist. Aus Fig. 3(a) und Tabelle I ist auch ersichtlich, dass in der Regel einige Messsegmente nicht von einem Längsstreifen umschlungen sind. Der gemessene Bahnzug ist bei diesen Messsegmenten entsprechend Null und er trägt nicht zu dem gesamten Bahnzug eines der Längsstreifen bei.

**Tabelle I**

| **Messsegment Walze 20A** | **gemessener Bahnzuganteil (N)** | **Streifenzuordnung** | **gesamter Bahnzug (N)** |
|---|---|---|---|
| #1 | 10 | 42-1 | 100 |
| #2 | 50 | 42-1 | |
| #3 | 40 | 42-1 | |
| #4 | 0 | | |
| #5 | 30 | 42-2 | 100 |
| #6 | 50 | 42-2 | |
| #7 | 20 | 42-2 | |
| #8 | 0 | | |
| #9 | 50 | 42-3 | 100 |
| #10 | 50 | 42-3 | |
| #11 | 0 | | |
| #12 | 20 | 42-4 | 100 |
| #13 | 50 | 42-4 | |
| #14 | 30 | 42-4 | |
| #15 | 0 | | |
| #16 | 0 | | |

Zur Bestimmung der gesamten Bahnzüge der Längsstreifen 42, 44 wird vor der Messung in der der Messwalze 20A zugeordneten Auswerteeinheit 18 bzw. dem zugehörigen Bahnzugzusammenführungsmittel 19 hinterlegt, welche der Messsegmente 22 jeweils den Längsstreifen 42-1 bis 42-4 zugeordnet, das heißt, im Messbetrieb von diesen umschlungen sind. Bei der Messung werden die von den Kraftaufnehmern 26 der Messsegmente ermittelten Bahnzuganteile über die elektrischen Leiter 16 der Achse 12 zur Auswerteeinheit 18 geleitet. Das Bahnzugzusammenführungsmittel 19 bestimmt dann aus den ermittelten Bahnzuganteilen und den hinterlegten Streifenzuordnungen den gesamten Bahnzug für jeden der Längsstreifen die 42-1 bis 42-4.

Beispielsweise sind die Messsegmente #1, #2 und #3 der Messwalze 20A dem Längsstreifen 42-1 zugeordnet und die der Auswerteeinheit von diesen Messsegmenten übermittelten Bahnzuganteile betragen 10 N (Segment #1), 50 N (Segment #2) und 40 N (Segment #3). Der gesamte Bahnzug des Längsstreifens 42-1 beträgt daher 10 N + 50 N + 40 N = 100 N.

Mit Bezug auf Fig. 3(b) umschlingt in der zweiten Ebene der Längsstreifen 44-1 die Messsegmente #3, #4 und #5 der Messwalze 20B, der Längsstreifen 44-2 die Messsegmente #7 und #8, der Längsstreifen 44-3 die Messsegmente #11 und #12 und der Längsstreifen 44-4 die Messsegmente #14, #15 und #16.

Die Tabelle II zeigt für die 16 Messsegmente 22 der Messwalze 20B die von den Kraftaufnehmern jeweils gemessenen Bahnzuganteile in Newton (N), die Streifenzuordnung, sowie die daraus bestimmten gesamten Bahnzüge der Längsstreifen 44 in Newton (N). Die Vorgehensweise folgt dabei der oben mit Bezug auf die Messwalze 20A bereits beschriebenen Vorgehensweise.

**Tabelle II**

| **Messsegment Walze 20B** | **gemessener Bahnzuganteil (N)** | **Streifenzuordnung** | **gesamter Bahnzug (N)** |
|---|---|---|---|
| #1 | 0 | | |
| #2 | 0 | | |
| #3 | 10 | 44-1 | 80 |
| #4 | 50 | 44-1 | |
| #5 | 20 | 44-1 | |
| #6 | 0 | | |
| #7 | 30 | 44-2 | 80 |
| #8 | 50 | 44-2 | |
| #9 | 0 | | |
| #10 | 0 | | |
| #11 | 50 | 44-3 | 80 |
| #12 | 30 | 44-3 | |
| #13 | 0 | | |
| #14 | 20 | 44-4 | 80 |
| #15 | 50 | 44-4 | |
| #16 | 10 | 44-4 | |

Die Messung der Bahnzüge einer anderen geschnittenen Materialbahn mit Längsstreifen 46, 48 konstanter Breite ist in Fig. 4 illustriert. Die Längsstreifen 46, 48 weisen jeweils eine Breite von 180 mm auf und werden, wie die Längsstreifen der Fig. 3, alternierend nach oben bzw. unten in unterschiedliche Ebenen geführt, um sich bei der Bahnzugmessung und einer nachfolgenden Aufwicklung nicht zu behindern.

Mit Bezug auf Fig. 4(a) umschlingt in einer ersten Ebene der Längsstreifen 46-1 die Messsegmente #1 bis #5 der Messwalze 20A, und der Längsstreifen 46-2 die Messsegmente #9 bis #12. Tabelle III zeigt für die 16 Messsegmente 22 der Messwalze 20A die von den Kraftaufnehmern jeweils gemessenen Bahnzuganteile in Newton (N), die Streifenzuordnung, sowie die daraus bestimmten gesamten Bahnzüge der Längsstreifen 46 in Newton (N).

**Tabelle III**

| **Messsegment Walze 20A** | **gemessener Bahnzuganteil (N)** | **Streifenzuordnung** | **gesamter Bahnzug (N)** |
|---|---|---|---|
| #1 | 10 | 46-1 | 180 |
| #2 | 50 | 46-1 | |
| #3 | 50 | 46-1 | |
| #4 | 50 | 46-1 | |
| #5 | 20 | 46-1 | |
| #6 | 0 | | |
| #7 | 0 | | |
| #8 | 0 | | |
| #9 | 50 | 46-2 | 180 |
| #10 | 50 | 46-2 | |
| #11 | 50 | 46-2 | |
| #12 | 30 | 46-2 | |
| #13 | 0 | | |
| #14 | 0 | | |
| #15 | 0 | | |
| #16 | 0 | | |

Mit Bezug auf Fig. 4(b) umschlingt in einer zweiten Ebene der Längsstreifen 48-1 die Messsegmente #5 bis #8 der Messwalze 20B, und der Längsstreifen 48-2 die Messsegmente #12 bis #16. Tabelle IV zeigt für die 16 Messsegmente 22 der Messwalze 20B die von den Kraftaufnehmern jeweils gemessenen Bahnzuganteile in Newton (N), die Streifenzuordnung, sowie die daraus bestimmten gesamten Bahnzüge der Längsstreifen 48 in Newton (N).

**Tabelle IV**

| **Messsegment Walze 20B** | **gemessener Bahnzuganteil (N)** | **Streifenzuordnung** | **gesamter Bahnzug (N)** |
|---|---|---|---|
| #1 | 0 | | |
| #2 | 0 | | |
| #3 | 0 | | |
| #4 | 0 | | |
| #5 | 30 | 48-1 | 180 |
| #6 | 50 | 48-1 | |
| #7 | 50 | 48-1 | |
| #8 | 50 | 48-1 | |
| #9 | 0 | | |
| #10 | 0 | | |
| #11 | 0 | | |
| #12 | 20 | 48-2 | 180 |
| #13 | 50 | 48-2 | |
| #14 | 50 | 48-2 | |
| #15 | 50 | 48-2 | |
| #16 | 10 | 48-2 | |

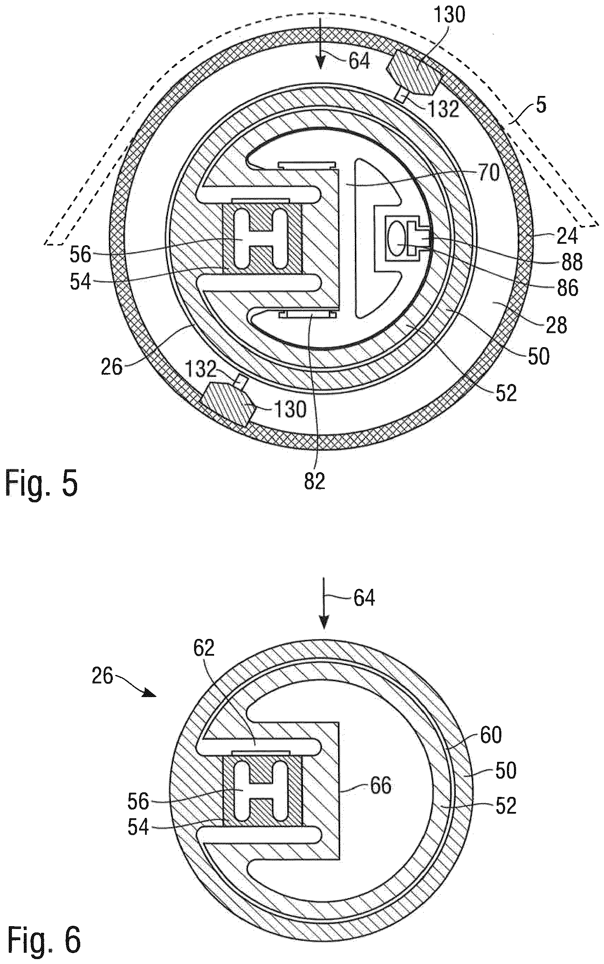

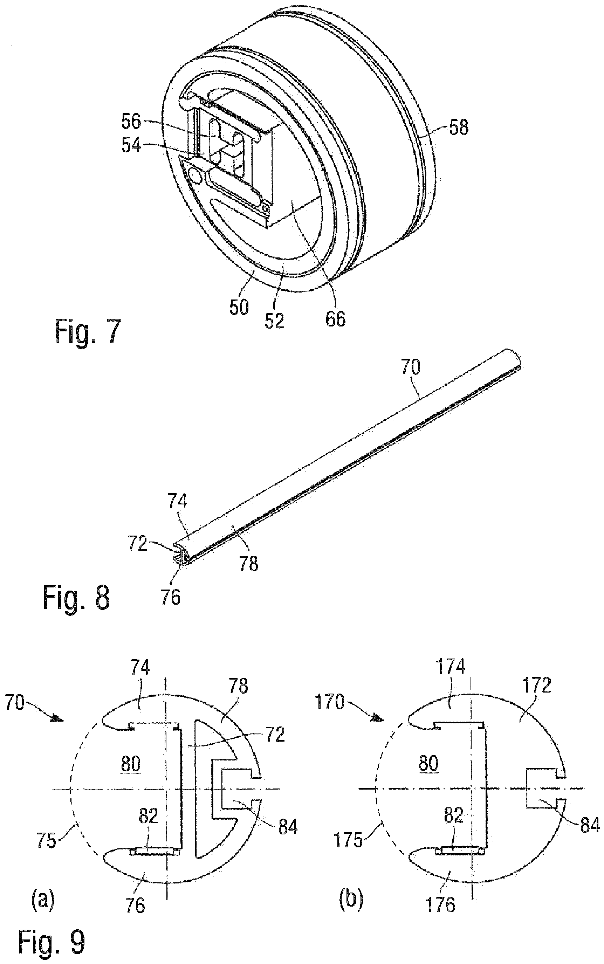

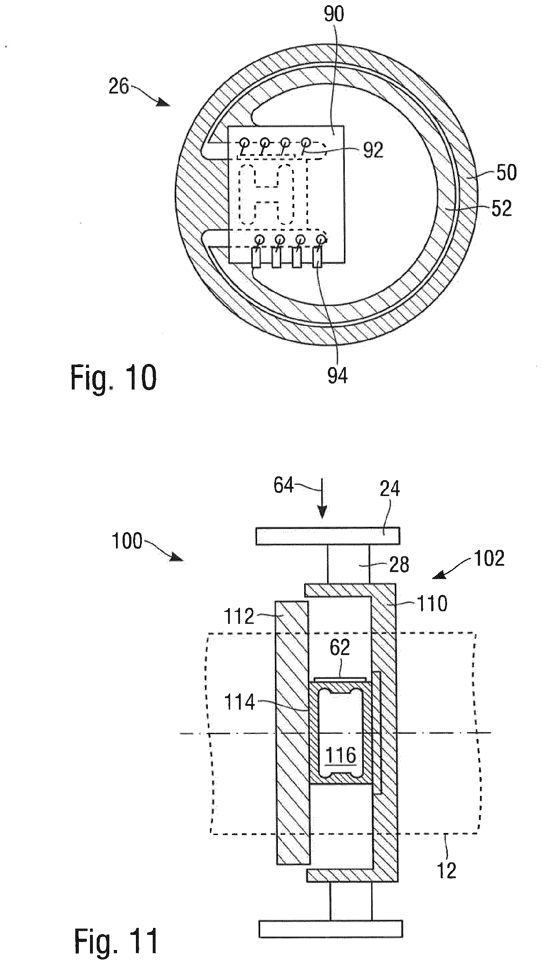

Eine vorteilhafte Ausbildung der Messsegmente 22 und der Achse 70 einer erfindungsgemäßen Kraftmesseinrichtung wird nun mit Bezug auf die Figuren 5 bis 10 näher beschrieben. Figur 5 zeigt dabei einen Querschnitt durch die Kraftmesseinrichtung 10 und eines der Messsegmente 22. Der Kraftaufnehmer 26 eines Messsegmentes 22 alleine ist in Fig. 6 im Querschnitt, in Fig. 7 in perspektivischer Ansicht und in Fig. 10 mit eingezeichneter Elektronikplatine dargestellt, die Achse 70 alleine ist in perspektivischer Ansicht in Fig. 8 und in Fig. 9 im Querschnitt gezeigt.

Mit Bezug zunächst auf Fig. 5 enthält ein Messsegment 22 radial von außen nach innen einen Walzenmantel 24, ein Wälzlager 28 und einen Kraftaufnehmer 26. Ein das Messsegment 22 umschlingender Längsstreifen 5 ist mit gestrichelten Linien angedeutet.

Der in den Figuren 6 und 7 nochmals separat dargestellte Kraftaufnehmer 26 umfasst einen äußeren Ring 50, einen konzentrischen inneren Ring 52 und einen Messabschnitt 54 mit einer H-förmigen Ausnehmung 56. Der äußere Ring 50 kann Einschnitte 58 (Fig. 7) zur Aufnahme des Wälzlagers 28 über nicht dargestellte Sicherungsringe aufweisen, der innere Ring 52 liegt auf der Achse 70 auf und stellt die oben genannte Halterung bereit. Der innere Ring 52 und der äußere Ring 50 sind im Ausführungsbeispiel radial ineinander angeordnet und in einem radialen Verbindungsbereich durch den Messabschnitt 54 verbunden. Der innere Ring 52 weist hierzu eine Einbuchtung 66 auf, die sich radial bis zum Mittelpunkt des inneren Rings 52 erstreckt. In der Einbuchtung 66 ist einerseits der Verbindungsbereich mit dem äußeren Ring aufgenommen, andererseits dient sie der sicheren Führung des Kraftaufnehmers in der axialen Führungskammer 80 (Fig. 9) der Achse 70.

Der äußere Ring 50, der innere Ring 52 und der Messabschnitt 54 sind einstückig ausgebildet, die unterschiedlichen Schraffuren der Figuren 5 und 6 dienen lediglich der Veranschaulichung der verschiedenen Funktionsbereiche 50, 52, 54 des Kraftaufnehmers 26.

Außerhalb des Verbindungsbereichs sind der innere und der äußere Ring durch einen radialen Spalt 60 getrennt, dessen Breite so bemessen ist, dass der bewegliche äußere Ring 50 bei Überlast an dem auf der Achse 70 fixierten inneren Ring 52 ansteht und so eine plastische Deformation und damit eine Zerstörung des Kraftaufnehmers 26 vermeidet. Im Ausführungsbeispiel ist die Breite des Spalts 60 auf 110% des Messwegs bei Nennbelastung ausgelegt.

Durch die H-förmige Ausnehmung 56 bildet der Messabschnitt 54 einen Doppelbiegebalken, bei dem im gezeigten Ausführungsbeispiel an dessen Oberseite Dehnmessstreifen 62 zur Messung der durch die Krafteinleitung erzeugten mechanischen Spannung an der Materialoberfläche angeordnet sind. Es versteht sich, dass Dehnmessstreifen 62 auch an der Unterseite oder sowohl an Ober- und Unterseite oder innerhalb des Doppelbiegebalkens vorgesehen sein können.

Die Umschlingung des Messsegments 22 mit einem Längsstreifen 5 der Materialbahn erzeugt eine vom Umschlingungswinkel und dem Bahnzuganteil abhängige Kraft 64, die den beweglichen äußeren Ring 50 des Kraftaufnehmers 26 gegenüber dem fixierten inneren Ring 52 nach unten verschiebt und dadurch zu einer Verbiegung des Doppelbiegebalkens des Messabschnitts 54 führt. Diese Verbiegung wird von den Dehnmessstreifen 62 erfasst und ein entsprechendes elektrisches Signal erzeugt, das von einer Elektronikeinheit des Messsegments 22 vorverstärkt und in geeigneter Form über die Stromschienen der Achse 70 an die Auswerteeinheit 18 übermittelt wird. Wegen der hohen Empfindlichkeit und Auflösung dieses Messprinzips werden auch die Kräfte von Längsstreifen korrekt erfasst, die ein Messsegment nur über einen kleinen Teil dessen Breite umschlingen.

Die Achse 70 ist mit Bezug auf die Figuren 5, 8 und 9(a) im gezeigten Ausführungsbeispiel als Strangprofil ausgebildet, das über seiner Breite eine Mehrzahl von einzeln messenden Messsegmenten 22 aufnehmen kann. Die Ausbildung der Achse 70 als Strangprofil ermöglicht eine biegesteife Ausbildung der Achse, die sich auch bei maximaler Belastung durch hohe Bahnzüge nicht oder nur minimal verformt und damit die geometrische Anordnung der Messsegmente über die Breite und somit auch die Bahnzugmessung nicht beeinflusst.

Die Strangprofilachse 70 ist im Ausführungsbeispiel mit einem kreisförmigen Querschnittsumfang 75 ausgebildet. Sie enthält einen zentralen vertikalen Steg 72, der die Stabilität der Achse sicherstellt, und von dem zwei horizontale Führungsschienen 74,76 und ein Führungsbogen 78 ausgehen. Die horizontalen Führungsschienen 74,76 bilden zusammen mit dem Steg 72 eine auf einer Seite offene, U-förmige, axiale Führungskammer 80 in der Achse 70, in die die Einbuchtung 66 des inneren Rings zur Führung und zum elektrischen Anschluss des Kraftaufnehmers hineinragt (Fig. 5). Der Führungsbogen 78 und die radialen Außenflächen der Führungsschienen 74, 76 sind mit ihrer Krümmung mit enger Toleranz an die Krümmung des inneren Rings 52 angepasst, so dass die Messsegmente 22 auf der Achse leicht und sicher befestigt werden können.

Um die von den Dehnmessstreifen 62 des Kraftaufnehmers eines Messsegments 22 erzeugten elektrischen Signale zur Auswerteeinheit 18 zu führen, ist die untere horizontale Führungsschiene 76 der Achse 70 in einem zurückgesetzten Bereich mit axial verlaufenden Stromschienen 82 versehen, die die Stromversorgung und den elektrischen Kontakt mit den Messsegmenten 22 unabhängig von ihrer Messposition auf der Achse 70 ermöglichen. Es versteht sich, dass die Stromschienen grundsätzlich auch an anderer Stelle in der Führungskammer, beispielsweise an der oberen Führungsschiene 74 oder auch an beiden Führungsschienen 74, 76 vorgesehen sein können.

Anstelle eines Strangprofils kann die Achse auch als gefräste Achse 170 ausgebildet sein, wie in Fig. 9(b) dargestellt, in die eine beispielsweise U-förmige, axiale Führungskammer 80 und eine axiale Nut eingefräst sind. Der Achsenkörper 172 enthält dabei eine zentrale vertikale Tragstruktur, die die Stabilität der Achse sicherstellt, und von der zwei horizontale Führungsschienen 174, 176 ausgehen, um zusammen mit dem Achsenkörper 172 innerhalb des Querschnittsumfangs 175 eine axiale Führungskammer 80 in der Achse 70 ausbilden, in die die Einbuchtung 66 des inneren Rings zur Führung und zum elektrischen Anschluss des Kraftaufnehmers hineinragt.

Wie in Fig. 10 illustriert, enthalten die Kraftaufnehmer 26 neben den bereits beschriebenen mechanischen Elementen eine Platine 90 mit einer Elektronikschaltung, die in einem Kontaktbereich 92 zur Speisung und Abnahme des Messsignals mit den Dehnmessstreifen 62 verbunden ist und die über Stromabnehmer 94 an jeder beliebigen axialen Messposition der Achse 70 Kontakt zu den Stromschienen 82 herstellen kann. Die Elektronikschaltung der Platine 90 enthält im gezeigten Ausführungsbeispiel zur Aufbereitung der Signale einen Vorverstärker, der die Messsignale der Dehnmessstreifen 62 verstärkt, digitalisiert und das digitalisierte Messsignal an einen internen Bus weitergibt.

Im gezeigten Ausführungsbeispiel ist die Auswerteeinheit 18 an einem Ende der Achse angeordnet. Die Auswerteeinheit 18 kommuniziert mit den Messsegmenten 22 auf der Achse 70, nimmt deren Messwerte auf und verarbeitet sie mit dem Bahnzugzusammenführungsmittel 19 weiter. Die Auswerteeinheit kann auch mehrteilig sein und kann beispielsweise zwei Auswerteteileinheiten enthalten, die beiderseits der Achse angeordnet sind und die Messsignale jeweils eines Teils der Messsegmente aufnehmen und weiterverarbeiten.

Im Ausführungsbeispiel enthalten die Stromschienen 82 der Achse für die Kommunikation mit der Auswerteinheit 18 neben zwei Stromschienen für die Stromversorgung zwei weitere Stromschienen für die Datenübertragung, beispielsweise nach dem RS-485 Standard. Grundsätzlich können die vorverstärkten Messsignale natürlich auch analog zur Auswerteeinheit geführt werden.

Das Bahnzugzusammenführungsmittel 19 enthält insbesondere ein Mittel zur Hinterlegung einer Zuordnung von zu messenden Längsstreifen einer Materialbahn und den Messsegmenten 22 der segmentierten Messwalze 20, sowie ein Mittel zur Ermittlung des gesamten Bahnzugs für jeden der Längsstreifen aus den von den Messsegmenten gemessenen Bahnzuganteilen und der Zuordnung der Messsegmente zu den Längsstreifen.

Die Auswerteeinheit 18 kommuniziert ihrerseits über ein standardisiertes BusProtokoll mit einer übergeordneten Steuerung, die auf Grundlage der ermittelten Bahnzüge der Längsstreifen geeignete Aktionen auslöst, beispielsweise einen der Antriebe langsamer oder schneller laufen lässt, eine Alarmmeldung ausgibt oder dergleichen.

Eine sichere Arretierung der Messsegmente 22 auf der Achse 70 kann beispielsweise mit Hilfe eines axialen Luftschlauchs 86 und einer axialen Druckleiste 88 (Fig. 5) erfolgen, die beide in eine im Führungsbogen 78 der Achse 70 ausgebildeten Nut 84 eingelassen sind.

Die Messsegmente 22 können im entspannten Zustand des Luftschlauchs 86 auf die Achse aufgeschoben und an die gewünschten Messpositionen auf der Achse gebracht werden. Wird der Luftschlauch 86 dann aufgeblasen, drückt er mit einer vom Luftdruck abhängigen Kraft gegen die Druckleiste 88, die dadurch radial leicht aus der Nut 84 herausgedrückt wird. Die Druckleiste 88 klemmt dadurch die positionierten Messsegmente 22 gegen einen definierten Anschlag auf der Achse 70 und arretiert so gleichzeitig alle Messsegmente 22 in ihrer korrekten Messposition. Der Luftdruck des Luftschlauchs 86 wird von einem in der Auswerteeinheit 18 am Ende der Achse angeordneten Drucksensor überwacht.

In einer andern Erfindungsvariante ist anstelle des Luftschlauchs und der Druckleiste vorgesehen, dass die Messsegmente 22 jeweils mit einer mechanischen Arretierungsvorrichtung versehen sind, durch die sie einzeln auf der Achse fixiert werden können.

Bei dem beschriebenen Ausführungsbeispiel der Figuren 5 bis 10 verläuft der Messabschnitt 54 zwischen dem inneren und äußeren Ringe radialer Richtung, was aufgrund der einfacheren Konstruktion und hohen kraftschlüssigen Spannung gegenwärtig bevorzugt ist. Es ist allerdings ebenfalls möglich, den Messabschnitt eines Messsegments in axialer Richtung verlaufen zu lassen, wie nachfolgend anhand des Ausführungsbeispiels der Fig. 11 erläutert, in der ein Messsegment 100 einer erfindungsgemäßen Kraftmessvorrichtung schematisch in Seitenansicht gezeigt ist. Es versteht sich, dass in der Kraftmessvorrichtung eine Mehrzahl, beispielsweise 16 solche Messsegmente 100 auf einer Achse angeordnet sind.

Das Messsegment 100 enthält einen Kraftaufnehmer 102, der einen äußeren Ring 110, einen axial beabstandet angeordneten, konzentrischen inneren Ring 112 und einen axialen Messabschnitt 114 umfasst. Der innere Ring 112 sitzt mit wenig Toleranz auf der in der Figur mit gestrichelten Linien angedeuteten Achse 12 auf, so dass er im ungespannten Zustand entlang der Achse verschoben werden kann. Der äußere Ring 110 trägt außen die Lageraufnahme für die Wälzlager 28, auf deren äußerem Umfang der Walzenmantel 24 aufgebracht ist.

Der äußere Ring 110 und der innere Ring 112 sind durch einen axialen Messabschnitt 114 verbunden, der im Ausführungsbeispiel eine im Wesentlichen H-förmige Ausnehmung 116 aufweist und einen Doppelbiegebalken bildet, der mit Dehnmessstreifen 62 zur Erfassung der Spannungen des Messabschnitts 114 versehen ist. Die Toleranz des äußeren Rings 110 gegenüber der Achse 12 ist so bemessen, dass der äußere Ring bei Überlast auf der Achse 12 aufsteht und so eine Zerstörung des Kraftaufnehmers 102 verhindert.

Drückt aufgrund des Bahnzugs eine Kraft 64 auf den Walzenmantel 24 des Messsegments 100, so überträgt sich die Kraft über die Wälzlager auf den äußeren Ring 110, welcher sich über den Messabschnitt 114 am inneren Ring 112 abstützt. Die dadurch im Messabschnitt 114 erzeugten Spannungen werden durch die Dehnmessstreifen 62 erfasst und die erzeugten elektrischen Signale wie oben grundsätzlich bereits beschrieben vorverstärkt, gegebenenfalls digitalisiert, und in die Stromleitungen der Achse 12 eingeleitet. Die Messsegmente 100 sind beispielsweise mechanisch oder pneumatisch auf der Achse 12 in ihrer Messposition fixiert.

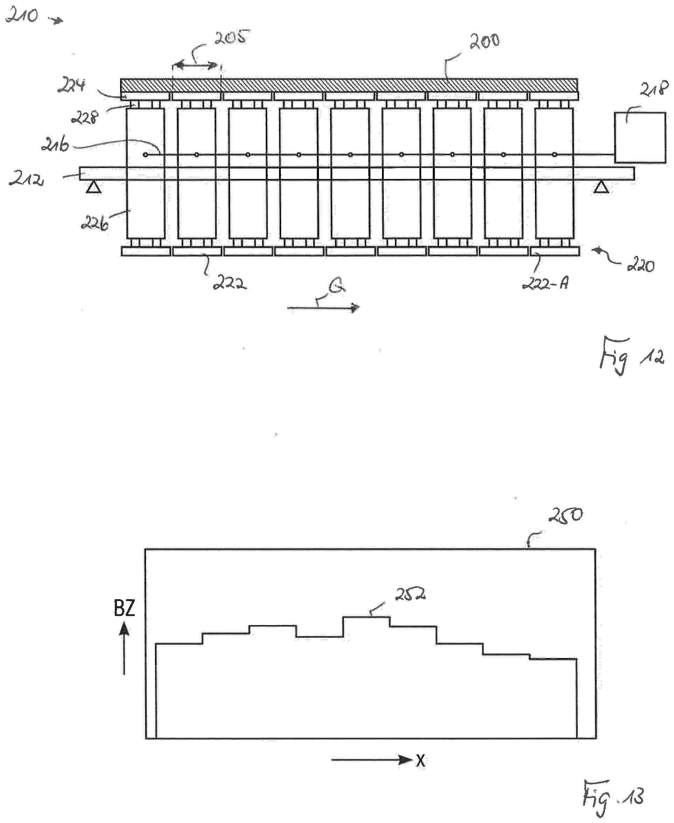

Figur 12 illustriert die Erfassung des Zugprofils einer ungeschnittenen laufenden Materialbahn 200 mit einer Kraftmesseinrichtung 210 nach einem weiteren Aspekt der Erfindung. Die Materialbahn 200 weist dabei eine durch die Laufrichtung der Materialbahn definierte Längsrichtung und eine Querrichtung Q auf, wobei das Zugprofil der Materialbahn in Querrichtung erfasst werden soll. Die Kenntnis diese Zugprofils oft von großem Nutzen. Um nur eine Anwendung zu nennen kann bei der Herstellung von Blasfolien durch eine Messung des Zugprofils des erzeugten Folienschlauchs das Kühlprofil des Schmelzschlauchs nachgeregelt werden, um ein gleichmäßiges Zugprofil des Folienschlauchs zu erhalten.

Zurückkommend auf die Darstellung der Fig. 12 weist die Kraftmesseinrichtung 210 eine biegesteife Achse 212 auf, die an ihren beiden Enden auf einem nicht dargestellten bauseitigen Untergerüst aufliegt. Auf der Achse 212 ist eine segmentierte Messwalze 220 abgestützt, die im Messbetrieb von der zu vermessenden ungeschnittenen Materialbahn 200 umschlungen ist, wobei im Ausführungsbeispiel jedes der Mehrzahl der Messsegmente 222 der Messwalze 220 von einem entsprechenden Längsabschnitt 205 der Materialbahn umschlungen ist.

Die Messsegmente 222 sind auf der Achse 212 entlang der Querrichtung Q praktisch spaltfrei nebeneinander angeordnet. Jedes Messsegment 222 weist einen Walzenmantel 224 auf, der im Messbetrieb von einem Teil der Materialbahn 220, nämlich einem Längsabschnitt 205 umschlungen ist. Der Walzenmantel 224 ist jeweils über ein oder mehrere Wälzlager 228 mit einem Kraftaufnehmer 226 verbunden, der der Bestimmung des lokalen Bahnzugs des Längsabschnitts 205 dient. Jeder Kraftaufnehmer 226 stellt zudem eine Halterung bereit, mit der das jeweilige Messsegment 222 auf der Achse 212 aufsitzt.

Die Kraftmesseinrichtung 210 weist weiter eine Auswerteeinheit 218 auf, mit der die Messsegmente 222 über elektrische Leiter 216 verbunden sind und zu der die von den Kraftaufnehmern 226 der Messsegmente 222 gelieferte Messsignale leitbar sind. Dabei sind elektrische Leiter 216 jeweils zwischen benachbarten Messsegmenten 222 vorgesehen und nur das äußerste Messsegment 222-A ist mit der Auswerteeinheit 218 verbunden, die Messsignale werden also über die die Messsegmente 222 verbindenden Leiter 216 zur Auswerteeinheit 218 durchgeschleift.

Da jedes Messsegment 222 einen eigenen Kraftaufnehmer 226 für die Bestimmung des lokalen Bahnzugs des das Messsegment 222 umschlingenden Längsabschnitts 205 der Materialbahn enthält, kann aus den Messwerten aller Messsegmente 222 ein Zugprofil der Materialbahn erstellt werden, wie in Fig. 13 illustriert.

Dabei misst jedes der Messsegmente 222 über seinen eigenen Kraftaufnehmer 226 jeweils den lokalen Bahnzug BZ(x) am Ort x des jeweiligen Messsegments entlang der Querrichtung Q der Materialbahn. Aus der Gesamtheit der Messwerte kann die Auswerteeinheit 218 ein Zugprofil-Diagramm 250 wie in Fig. 13 erstellen, in dem der lokale Bahnzug BZ(x) als Kurve 252 über der Ortskoordinate x in Querrichtung der Materialbahn 200 aufgetragen ist.

Aus der Kenntnis des Zugprofils 252 können dann geeignete Maßnahmen abgeleitet werden, beispielsweise können bei einem ungleichmäßigen Profil Regelungsmaßnahmen ergriffen werden, die zu einem gleichmäßigeren Zugprofil führen. Wird der zeitliche Verlauf des lokalen Bahnzugs 252 angezeigt, beispielsweise in einem Wasserfall-Diagramm, können auch periodische Signale, wie etwa unrunde Abwickelrollen, periodische Faltenbildungen und dergleichen leicht erkannt werden.

Die Breite der für die Zugprofilmessung eingesetzten Messsegmente 222 kann wie im Ausführungsbeispiel der Fig. 12 gleich sein, es kann aber auch zweckmäßig sein, unterschiedlich breite Messsegmente 222 einzusetzen. Beispielsweise können in dem mittleren Bereich der Materialbahn 200 Messsegmente 222 mit schmäleren Walzenmänteln als an den Randbereichen der Materialbahn eingesetzt werden.

## Patentansprüche

1. Kraftmesseinrichtung zur Erfassung der Bahnzüge einer Mehrzahl von beabstandeten Längsstreifen einer längsgeschnittenen laufenden Materialbahn, die eine durch die Laufrichtung der Materialbahn definierte Längsrichtung und eine Querrichtung aufweist, wobei die Kraftmesseinrichtung eine Achse und auf der Achse abgestützte, von der Materialbahn umschlungene Messwalze aufweist, bei der
- die Messwalze als segmentierte Messwalze mit einer Mehrzahl von Messsegmenten ausgebildet ist,
- die Messsegmente auf der Achse in einer jeweiligen Messposition angeordnet sind, so dass die beabstandeten Längsstreifen der laufenden Materialbahn jeweils eines oder mehrere Messsegmente umschlingen und jedes Messsegment von höchstens einem Längsstreifen umschlungen ist,
- jedes Messsegment einen eigenen Kraftaufnehmer für die Bestimmung eines Bahnzuganteils des das Messsegment umschlingenden Längsstreifens enthält, wobei der Kraftaufnehmer eine Halterung bereitstellt, mit der das Messsegment auf der Achse aufsitzt,
- die Kraftmesseinrichtung weiter eine Auswerteeinheit aufweist, mit der die Messsegmente über elektrische Leiter verbunden sind und zu der die von den Kraftaufnehmern der Messsegmente gelieferte Messsignale leitbar sind, und
- die Auswerteeinheit ein Bahnzugzusammenführungsmittel umfasst, das ausgelegt und eingerichtet ist, für jeden Längsstreifen aus den Bahnzuganteilen, die von den Kraftaufnehmern der von diesem Längsstreifen umschlungenen Messsegmente bestimmt werden, den gesamten Bahnzug des Längsstreifens zu bestimmen.

2. Kraftmesseinrichtung nach Anspruch 1, **dadurch gekennzeichnet, dass** die Messsegmente neben dem Kraftaufnehmer einen Walzenmantel und eine von dem Kraftaufnehmer getragene Lagerung für den Walzenmantel umfassen.

3. Kraftmesseinrichtung nach Anspruch 1 oder 2, **dadurch gekennzeichnet, dass** der Kraftaufnehmer jeweils einen auf der Achse aufliegenden, und die genannte Halterung bereitstellenden Innenring, einen gegenüber dem Innenring verschiebbaren, konzentrischen Außenring und einen den Innenring und Außenring in einem Verbindungsbereich verbindenden Messabschnitt aufweist, der vorteilhaft in Form eines Doppelbiegebalkens ausgebildet ist, vorzugsweise, dass der Innenring eine Einbuchtung aufweist, in der der Verbindungsbereich mit dem Außenring aufgenommen ist, besonders bevorzugt, dass der Kraftaufnehmer mit der Einbuchtung des Innenrings in einer axialen Führungskammer der Achse geführt ist.

4. Kraftmesseinrichtung nach Anspruch 3, **dadurch gekennzeichnet, dass** der Innenring und der Außenring radial ineinander angeordnet und in einem radialen Verbindungsbereich durch den Messabschnitt verbunden sind, oder dass der Innenring und der Außenring axial beabstandet angeordnet und in einem axialen Verbindungsbereich durch den Messabschnitt verbunden sind.

5. Kraftmesseinrichtung nach wenigstens einem der Ansprüche 1 bis 4, **dadurch gekennzeichnet, dass** der Kraftaufnehmer mit Dehnmessstreifen zur Erfassung des Bahnzugs versehen ist, wobei vorzugsweise der einen Innenring und einen Außenring verbindende Messabschnitt mit den genannten Dehnmessstreifen zur Erfassung der in dem Messabschnitt erzeugten mechanischen Spannung versehen ist.

6. Kraftmesseinrichtung nach wenigstens einem der Ansprüche 1 bis 5, **dadurch gekennzeichnet, dass** die Achse als Strangprofil ausgebildet ist, welches vorzugsweise einen vertikalen Steg und zwei von dem vertikalen Steg ausgehende horizontale Führungsschienen aufweist, wobei der vertikale Steg und die beiden Führungsschienen eine axiale Führungskammer, insbesondere eine U-förmige axiale Führungskammer in dem Strangprofil der Achse bilden.

7. Kraftmesseinrichtung nach wenigstens einem der Ansprüche 1 bis 6, **dadurch gekennzeichnet, dass** die elektrischen Leiter in der Achse und sich im Wesentlichen in axialer Richtung über die gesamte Breite der Achse erstreckend vorgesehen sind und axial an jeder Stelle kontaktierbar sind, vorzugsweise, dass die Achse eine axiale Führungskammer aufweist, die mit axial verlaufenden Stromschienen versehen ist, die an einer beliebigen axialen Position von Stromabnehmern der Kraftaufnehmer der Messsegmente kontaktierbar sind und die genannten elektrischen Leiter bilden.

8. Kraftmesseinrichtung nach wenigstens einem der Ansprüche 1 bis 6, **dadurch gekennzeichnet, dass** elektrische Leiter jeweils zwischen benachbarten Messsegmenten vorgesehen sind und dass nur das äußerste Messsegment oder die äußersten Messsegmente mit der Auswerteeinheit verbunden sind, so dass die Messsignale über die die Messsegmente verbindenden Leiter zur Auswerteeinheit durchgeschleift werden.

9. Kraftmesseinrichtung nach wenigstens einem der Ansprüche 5 bis 8, **dadurch gekennzeichnet, dass** die Messsegmente jeweils eine Elektronikeinheit zur Speisung der Dehnmessstreifen und zur Aufnahme, zur Vorverstärkung, vorzugsweise zusätzlich zur Digitalisierung, und zur Einleitung der vorverstärkten und gegebenenfalls digitalisierten Messsignale in die elektrischen Leitungen, insbesondere die Stromschienen der Achse enthalten.

10. Kraftmesseinrichtung nach wenigstens einem der Ansprüche 2 bis 9, **dadurch gekennzeichnet, dass** die Messsegmente so auf der Achse angeordnet sind, dass ihre Walzenmäntel ohne sich zu berühren praktisch spaltfrei benachbart sind, vorzugsweise, dass die Walzenmäntel der Messsegmente gleiche Breite aufweisen.

11. Kraftmesseinrichtung nach wenigstens einem der Ansprüche 2 bis 10, **dadurch gekennzeichnet, dass** das Bahnzugzusammenführungsmittel ein Mittel zur Hinterlegung einer Zuordnung von zu messenden Längsstreifen einer Materialbahn und den Messsegmenten der segmentierten Messwalze enthält, sowie ein Mittel zur Ermittlung des gesamten Bahnzugs für jeden der zu messenden Längsstreifen aus den von den Messsegmenten bestimmten Bahnzuganteilen und der hinterlegten Zuordnung der Messsegmente zu den zu messenden Längsstreifen.

12. System zur Erfassung der Bahnzüge einer Mehrzahl von Längsstreifen einer längsgeschnittenen laufenden Materialbahn, die eine durch die Laufrichtung der Materialbahn definierte Längsrichtung und eine Querrichtung aufweist, mit
- zwei oder mehr verschiedenen Materialpfaden zur Führung jeweils eines Teils der Längsstreifen der geschnitten Materialbahn in verschiedene Ebenen, um mehrere Materialteilbahnen mit jeweils einer Mehrzahl von beabstandeten Längsstreifen zu erhalten, und
- zwei oder mehr Kraftmesseinrichtungen nach einem der Ansprüche 1 bis 11 zur Erfassung der Bahnzüge der Mehrzahl von beabstandeten Längsstreifen der Materialteilbahnen.

13. Verfahren zur Erfassung der Bahnzüge einer Mehrzahl von beabstandeten Längsstreifen einer längsgeschnittenen laufenden Materialbahn mit einer Kraftmesseinrichtung nach einem der Ansprüche 1 bis 11, bei dem
- die Mehrzahl von beabstandeten Längsstreifen der Materialbahn so über die segmentierte Messwalze der Kraftmesseinrichtung geführt werden, dass die beabstandeten Längsstreifen jeweils eines oder mehrere Messsegmente umschlingen und jedes Messsegment von höchstens einem Längsstreifen umschlungen ist,
- mit den Kraftaufnehmern der Messsegmente der Bahnzuganteil des das jeweilige Messsegment umschlingenden Längsstreifens bestimmt wird,
- die von den Kraftaufnehmern bestimmten Messsignale zu der Auswerteeinheit geleitet werden, und von dem Bahnzugzusammenführungsmittel für jeden Längsstreifen aus den Bahnzuganteilen, die von den Kraftaufnehmern der von diesem Längsstreifen umschlungenen Messsegmente bestimmt wurden, der gesamten Bahnzug des Längsstreifens bestimmt wird.

14. Verfahren zur Erfassung der Bahnzüge einer Mehrzahl von Längsstreifen einer längsgeschnittenen laufenden Materialbahn mit einem System nach Anspruch 12, bei dem
- jeweils ein Teil der Längsstreifen der geschnitten Materialbahn entlang eines der Materialpfade in verschiedene Ebenen geführt wird, so dass mehrere Materialteilbahnen mit jeweils einer Mehrzahl von beabstandeten Längsstreifen erhalten werden, und
- die Bahnzüge der Mehrzahl von beabstandeten Längsstreifen der Materialteilbahnen mit zwei oder mehr Kraftmesseinrichtungen nach einem der Ansprüche 1 bis 11 erfasst werden.

15. Kraftmesseinrichtung zur Erfassung des Zugprofils einer ungeschnittenen laufenden Materialbahn, die eine durch die Laufrichtung der Materialbahn definierte Längsrichtung und eine Querrichtung aufweist, wobei die Kraftmesseinrichtung eine Achse und auf der Achse abgestützte, von der Materialbahn umschlungene Messwalze aufweist, bei der
- die Messwalze als segmentierte Messwalze mit einer Mehrzahl von Messsegmenten ausgebildet ist,
- die Messsegmente auf der Achse in einer jeweiligen Messposition angeordnet sind,
- jedes Messsegment einen eigenen Kraftaufnehmer für die Bestimmung eines Bahnzuganteils des das Messsegment umschlingenden Längsabschnitts der Materialbahn enthält, wobei der Kraftaufnehmer eine Halterung bereitstellt, mit der das Messsegment auf der Achse aufsitzt,
- die Kraftmesseinrichtung weiter eine Auswerteeinheit aufweist, mit der die Messsegmente über elektrische Leiter verbunden sind und zu der die von den Kraftaufnehmern der Messsegmente gelieferte Messsignale leitbar sind,
- wobei elektrische Leiter jeweils zwischen benachbarten Messsegmenten vorgesehen sind und nur das äußerste Messsegment oder die äußersten Messsegmente mit der Auswerteeinheit verbunden sind, so dass die Messsignale über die die Messsegmente verbindenden Leiter zur Auswerteeinheit durchgeschleift werden.

16. Kraftmesseinrichtung nach Anspruch 15, **dadurch gekennzeichnet, dass** die Messsegmente neben dem Kraftaufnehmer einen Walzenmantel und eine von dem Kraftaufnehmer getragene Lagerung für den Walzenmantel umfassen, und dass die Messsegmente so auf der Achse angeordnet sind, dass ihre Walzenmäntel ohne sich zu berühren praktisch spaltfrei benachbart sind.
